# EUROPEAN PATENT APPLICATION

(11) **EP 4 660 223 A1**
(43) Date of publication of application: **10.12.2025**
(21) Application number: 25170078.7
(22) Date of filing: 11.04.2025
(51) Int. Cl.: C08J 9/00, B29C 70/66, C08J 9/32, C08K 7/20, C08K 7/28, C08K 13/04

(54) **SYNTACTIC FOAM AND METHOD OF MANUFACTURING SAME**

(30) Priority: 05.06.2024 US 202418735112
(71) Applicant: The Boeing Company, Arlington, VA 22202 (US)
(72) Inventor: GROSS, Adam Franklin, Arlington, 22202 (US); ROPER, Christopher Stephen, Arlington, 22202 (US); VAN BUSKIRK, Caleb Griffith, Arlington, 22202 (US)
(74) Representative: Plasseraud IP

(57) **Abstract**

A syntactic foam 120 is comprised of a matrix 150, a quantity of porous polymer beads 200 in the matrix 150, each of which is smaller than 1.5 mm in width, and a quantity of hollow microspheres 300 distributed within the matrix 150 amongst the quantity of porous polymer beads 200. The largest of the hollow microspheres 300 is at least 7 times smaller than the smallest of the porous polymer beads 200, and the hollow microspheres 300 have a size distribution of ±10 µm.

## Description

### FIELD

The present disclosure relates generally to buoyancy materials and, more specifically, to a syntactic foam containing inclusions having a controlled size distribution.

### BACKGROUND

Subsea vessels such as unmanned undersea vehicles use buoyancy material to maintain stability at different depths. Buoyancy material is also used in subsea packages such as cabled observatory nodes and unattended sensors to improve deployment efficiency and allow the subsea packages to remain submerged at specific depths. Syntactic foam is commonly used as a buoyancy material in a variety of subsea platforms such as subsea vessels and packages due to its relatively high hydrostatic crush strength.

Many subsea platforms face volume constraints due to shipping requirements. Such volume constraints reduce the available space for buoyancy materials. As a result, the buoyancy materials must be designed to fit within irregularly shaped pockets within the subsea platform, potentially requiring a large number of uniquely shaped buoyancy parts to meet buoyancy requirements. The need for uniquely shaped buoyancy parts drives up engineering and manufacturing costs and increases assembly time. In addition, the large number of uniquely shaped buoyancy parts complicates maintenance and servicing as many buoyancy parts must be removed to allow access to various systems of the subsea platform.

In view of the foregoing, there exists a need in the art for a buoyancy material that has a relatively high hydrostatic crush strength and a relatively low density for meeting buoyancy requirements of subsea applications.

### SUMMARY

The above-noted needs associated with buoyancy materials are addressed by the present disclosure which provides a syntactic foam. In its green state, the syntactic foam is laid out in the appended claims.

Also disclosed is a syntactic foam in a post-cured state as laid out in the appended claims.

Also disclosed is a method of manufacturing a syntactic foam as laid out in the appended claims.

The features, functions, and advantages that have been discussed can be achieved independently in various versions of the disclosure or may be combined in yet other versions, further details of which can be seen with reference to the following description and drawings.

### BRIEF DESCRIPTION OF THE DRAWINGS

The disclosure can be better understood with reference to the following detailed description taken in conjunction with the accompanying drawings, which examples, but which are not necessarily drawn to scale. The drawings are examples and not meant as limitations on the description or the claims.
Figure 1 shows an example of an unmanned undersea vehicle containing syntactic foam as a buoyancy material;
Figure 2 is a sectional view of an example syntactic foam according to the present description taken along line 2-2 of Figure 1;
Figure 3 is a magnified view of a portion of an example syntactic foam according to the present description, and which is comprised of a matrix containing a plurality of porous polymer beads and a plurality of hollow microspheres;
Figure 4 is a magnified view of an example of a porous polymer bead in the form of an expanded polystyrene bead;
Figure 5 is a sectional view of a portion of the example porous polymer bead of Figure 4 illustrating its internal structure when the syntactic foam is in the green state;
Figure 6 is a magnified view of an example of a hollow microsphere;
Figure 7 is a sectional view of the example hollow microsphere of Figure 6;
Figure 8 is a magnified view of an example of syntactic foam in which the porous polymer beads have an ellipsoidal shape;
Figure 9 is a magnified view of an example of syntactic foam in which the porous polymer beads have an irregular rounded shape;
Figure 10 is a chart showing the isostatic crush strength of two example types of hollow glass microspheres each having several different size distributions, and also showing the isostatic crush strength of bulk quantities of the same two example types of hollow glass microspheres;
Figure 11 is a graph of the size distribution of a bulk quantity of example hollow microspheres and a sorted quantity of example hollow microspheres;
Figure 12 is a chart of hydrostatic pressure for several different example syntactic foam configurations according to the present description, respectively containing several different size distributions of hollow microspheres;
Figure 13 is a plot of the water volume displacement as a function of hydrostatic pressure during testing of the hydrostatic crush strength of an example syntactic foam test specimen;
Figure 14 is a flowchart of operations included in an example method of method of manufacturing syntactic foam according to the present description;
Figure 15 is a schematic view of a quantity of porous polymer beads poured into a cylindrical mold as part of an example process of manufacturing syntactic foam according to the present description;
Figure 16 is a schematic view of the example mold sitting on a mechanical vibrator for high frequency vibration of the mold;
Figure 17 is a schematic view of the sieving of a bulk quantity of example hollow microspheres using one of at least two mesh sieves (e.g., a 50 µm sieve and a 70 µm sieve) required to obtain a sorted quantity of example hollow microspheres having a controlled particle size distribution (e.g., no greater than ± 10 µm);
Figure 18 is a schematic view of pouring the sorted quantity of example hollow microspheres into the mold while vibrating the mold using a mechanical vibrator;
Figure 19 is a schematic view of the mold containing an example powder bed;
Figure 20 is a magnified illustration of the portion of an example powder identified by reference numeral 20 of Figure 19;
Figure 21 is an exploded schematic view of an example mold assembly comprising a porous frit placed over the mold top side and over the mold bottom side;
Figure 22 is an assembled schematic view of the example mold assembly of Figure 21;
Figure 23 is a schematic view of an example manufacturing system comprising a vacuum pump fluidically coupled to the mold top side and a resin container fluidically coupled to the mold bottom side;
Figure 24 is a schematic view of the example manufacturing system during activation of the vacuum pump;
Figure 25 is a schematic view of the example manufacturing system after completion of room temperature cure of an example syntactic foam into its green state;
Figure 26 is a magnified view of the portion of the example syntactic foam identified by reference numeral 26 of Figure 25, and illustrating the internal structure of the porous polymer beads when the example syntactic foam is in the green state;
Figure 27 is a schematic view of an example mold in an oven for final curing of the example green state syntactic foam to fully crosslink the matrix (i.e., thermosetting resin);
Figure 28 is a schematic view showing the removal of an example syntactic foam from the mold after final cure;
Figure 29 is a magnified view of a portion of an example post-cured syntactic foam identified by reference numeral 29 of Figure 28.

The figures shown in this disclosure represent various aspects of the versions presented, and only differences will be discussed in detail.

### DETAILED DESCRIPTION

Disclosed versions will now be described more fully hereinafter with reference to the accompanying drawings, in which some, but not all of the disclosed versions are shown. Indeed, several different versions may be provided and should not be construed as limited to the versions set forth herein. Rather, these versions are provided so that this disclosure will be thorough and fully convey the scope of the disclosure to those skilled in the art.

This specification includes references to "configuration" and "configurations." Instances of the phrases "configuration" and "configurations." do not necessarily refer to the same configuration. Similarly, this specification includes references to "one example" or "an example." Instances of the phrases "one example" or "an example" do not necessarily refer to the same example. Particular features, structures, or characteristics may be combined in any suitable manner consistent with this disclosure.

As used herein, "comprising" is an open-ended term, and as used in the claims, this term does not foreclose additional components, structures, or steps.

As used herein, "configured to" means various parts or components may be described or claimed as "configured to" perform a task or tasks. In such contexts, "configured to" is used to connote structure by indicating that the parts or components include structure that performs those task or tasks during operation. As such, the parts or components can be said to be configured to perform the task even when the specified part or component is not currently operational (e.g., is not on).

As used herein, an element or step recited in the singular and preceded by the word "a" or "an" should be understood as not necessarily excluding the plural of the elements or steps. As used herein, the term "and/or" includes any and all combinations of one or more of the associated listed items. As also used herein, the term "combinations thereof" includes combinations having at least one of the associated listed items, wherein the combination can further include additional, like non-listed items.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

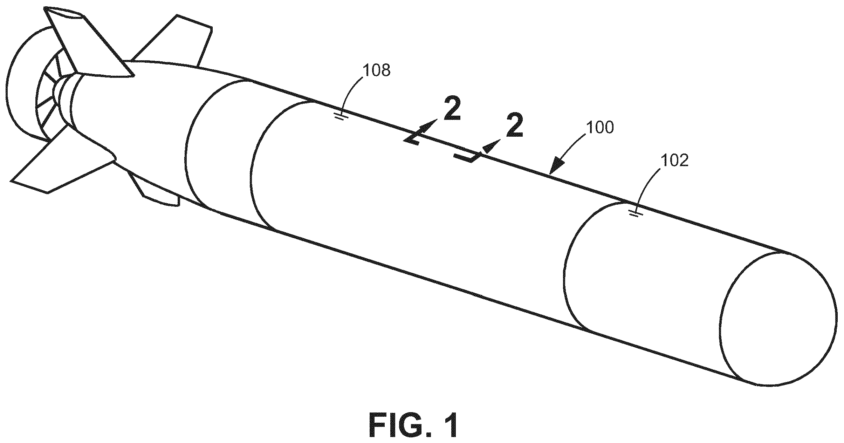

Referring now to the drawings which illustrate various examples of the disclosure, shown in Figure 1 is an unmanned undersea vehicle 100 containing syntactic foam 102. The syntactic foam 102 has a relatively high hydrostatic crush strength and a relatively low density, which allows the syntactic foam 102 to efficiently meet the buoyancy requirements of subsea applications such as the unmanned undersea vehicle 100 of Figure 1 and other subsea applications such as cabled observatory nodes and unattended sensors. Advantageously, the syntactic foam 102 can be readily formed into a foam product 108 that is shaped complementary to the interior pockets and/or exterior contours of undersea vehicles and other applications. The syntactic foam 102 is not limited to subsea applications, but can also be implemented in ground-based applications, air vehicle applications, and space-based applications.

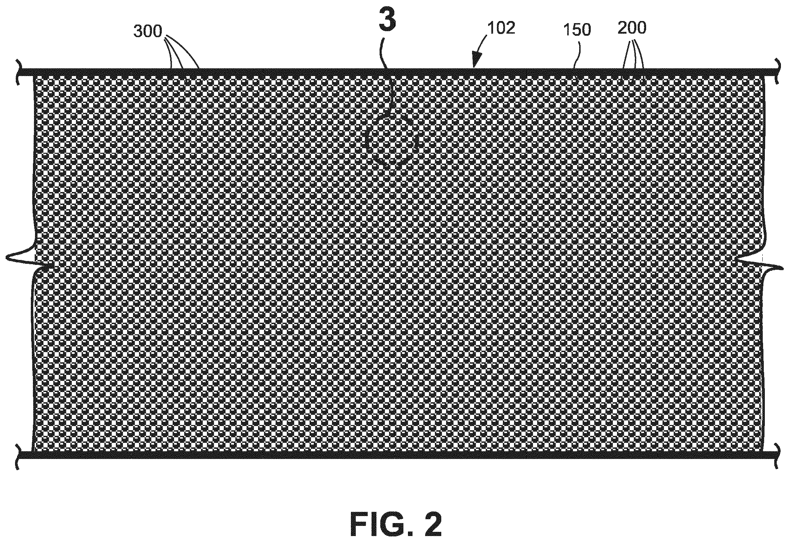

Referring to Figures 2-7, shown in Figure 2 is a sectional view of an example of the presently-disclosed syntactic foam 102, which is comprised of a matrix 150 which comprises a rigid or flexible volume, boundary, enclosure, container, or area, a quantity of porous polymer beads 200 distributed within the matrix 150, and a quantity of hollow microspheres 300 distributed within the matrix 150 amongst and between the porous polymer beads 200. As described below, the hollow microspheres 300 are provided in a relatively narrow size distribution, which results in the high hydrostatic crush strength and low density of the syntactic foam 102.

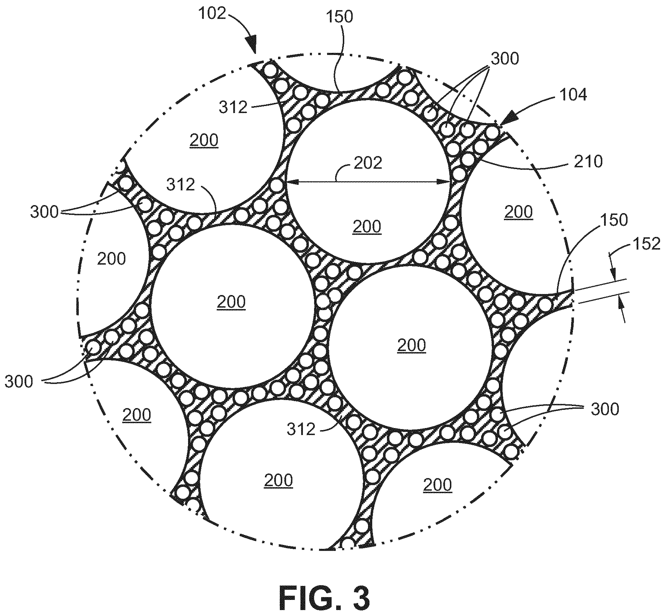

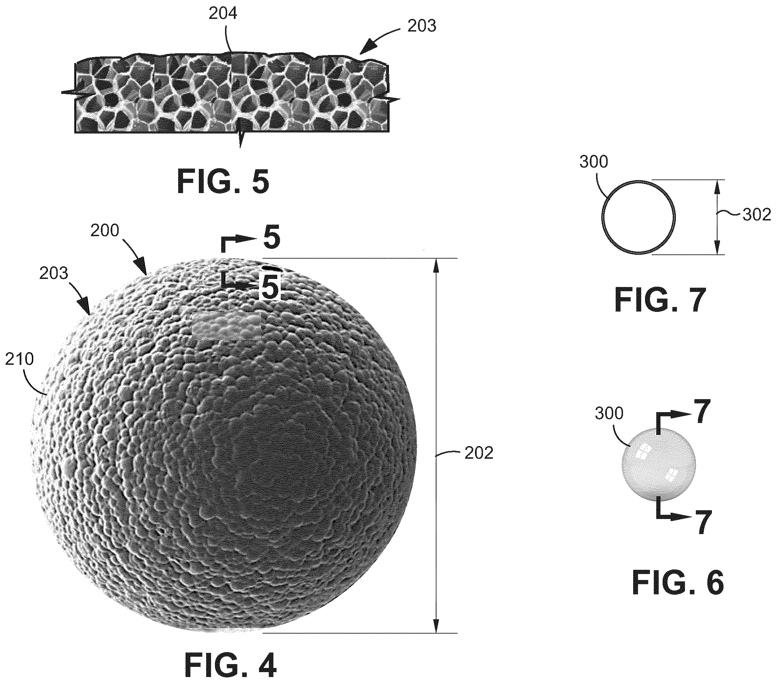

The porous polymer beads 200 and the hollow microspheres 300 are encapsulated in the matrix 150. The matrix 150 bonds the porous polymer beads 200 together, bonds the hollow microspheres 300 together, and bonds the porous polymer beads 200 to the hollow microspheres 300. The matrix 150 does not significantly penetrate into either the porous polymer beads 200 or the hollow microspheres 300. For example, the matrix 150 does not penetrate into each porous polymer bead 200 beyond a depth of more than 10 percent of the bead width 202 (e.g., Figure 3). Similarly, the matrix 150 does not penetrate into each hollow microsphere 300 beyond a depth of more than 10 percent of the microsphere diameter 302 (Figure 7). In another example, the porous polymer beads 200 and/or the hollow microspheres 300 are configured such that the matrix 150 does not penetrate beyond a depth of more than 5 percent respectively of the bead width 202 and the microsphere diameter 302.

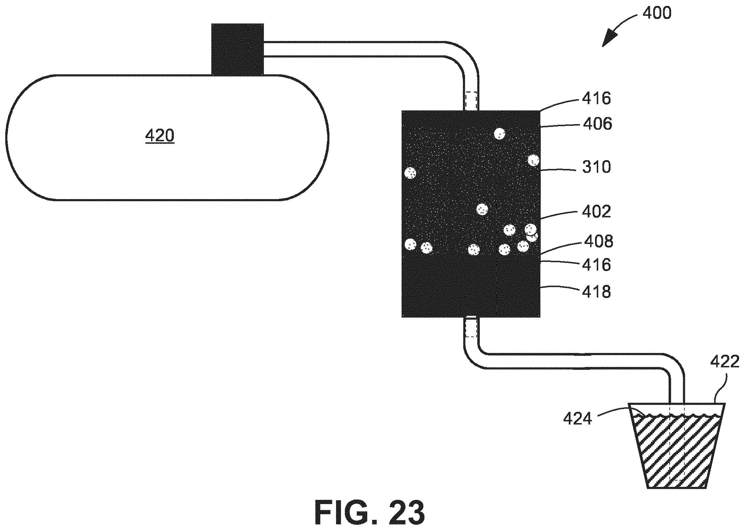

The matrix 150 is formed of a thermosetting resin mixture 424 (Figure 23) comprised of liquid resin and a hardener or catalyst. The matrix 150 (i.e., the resin) is a thermosetting material such as epoxy, silicone, polyurethane, polyuria, polyester, cyclic olefin, phenolic resin, polyimide, polybenzimidazole, and/or other thermosetting material. One example of epoxy resin is bisphenol A diglycidyl ether epoxy resin. The hardener is any suitable polymerization initiator such as amine or alcohol hardener, and is mixed in the appropriate ratio with the resin to obtain a resin mixture 424 that will harden or cure over time. Examples of the hardener include aliphatic polyamine hardener and cyclic polyamine hardener. Commercially available examples of two-part resin systems (i.e., resin and hardener) include DE NEEF^{™} Denepox I-40, available from GCP Applied Technologies of Alpharetta, Georgia; UltraThin2 Epoxy^{™}, available from Pace Technologies Corporation of Tucson, Arizona; and CI-SLV^{™} Super-low-viscosity Structural Injection Epoxy, available from Simpson Strong-Tie Company, Inc., of Pleasanton, California.

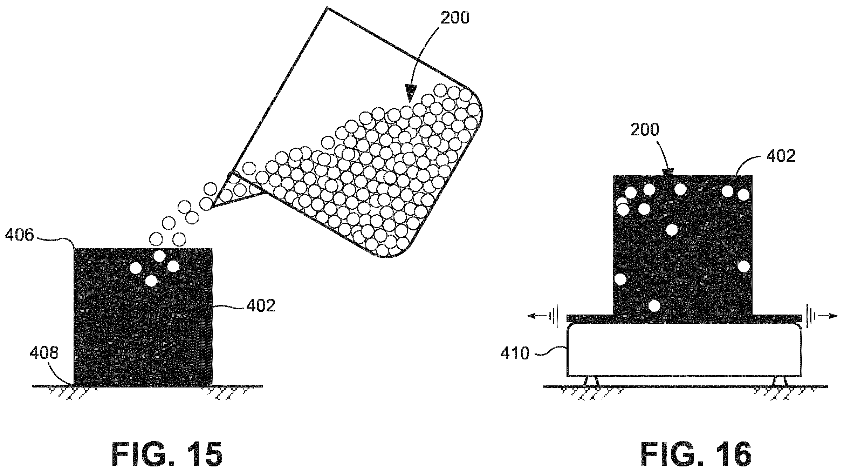

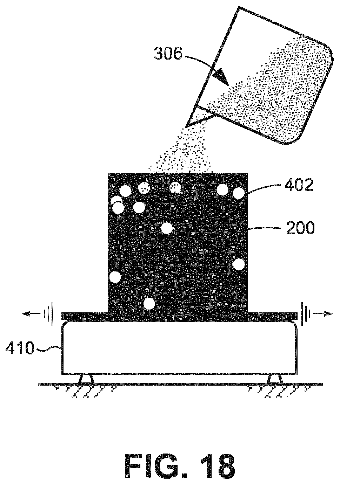

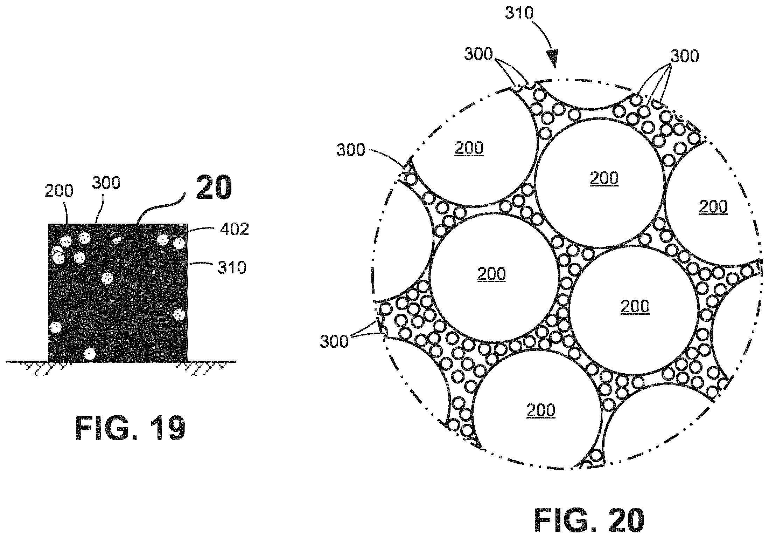

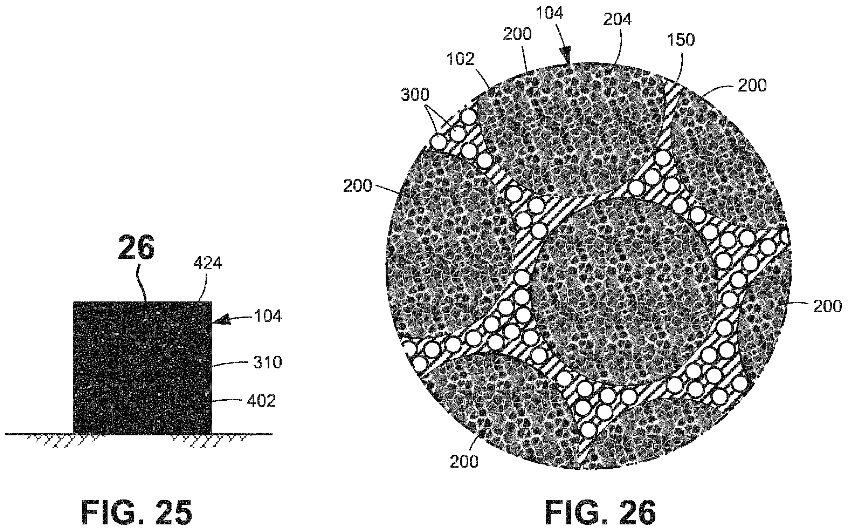

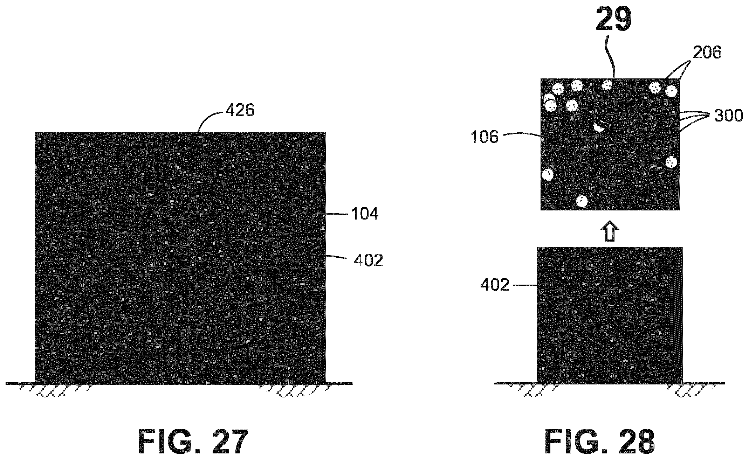

During manufacturing of the syntactic foam 102 as described below, the porous polymer beads 200 (Figure 15) are combined with the hollow microspheres 300 (Figure 18) in a mold 402 (Figure 15) to form a powder bed 310 (Figures 19-20) that is later impregnated with the resin mixture 424 (Figure 23). After the powder bed 310 is impregnated, the resin mixture 424 is allowed to cure (e.g., at room temperature or via a heated cure) into a green state in which the syntactic foam 102 is in a solid state and capable of holding its shape, but is potentially also soft and/or flexible. The green state syntactic foam 104 (Figure 26) is subjected to final cure by heat treating at an elevated temperature for a predetermined period of time to fully crosslink the matrix 150 (i.e., the resin mixture 424), and which results in post-cured syntactic foam 106 (Figures 28-29).

Figure 3 is a magnified view of a portion of green state syntactic foam 104, and which is comprised of the matrix 150 containing the quantity of porous polymer beads 200 and the quantity of hollow microspheres 300. In general, the hollow microspheres 300 maintain a desired spacing distance between the porous polymer beads 200. In the example shown, some of the hollow microspheres 300 are in contact with each other, and some of the hollow microspheres 300 are in contact with the porous polymer beads 200. In any of the syntactic foam 102 configurations disclosed herein, whether green state or post-cured, the syntactic foam 102 has a 55-75 volume percentage of porous polymer beads 200 relative to a combined volume of the hollow microspheres 300, the porous polymer beads 200, and the space filled by the matrix 150. The space filled by the matrix 150 is a combination of the space between neighboring hollow microspheres 300, the space between neighboring porous polymer beads 200, and the space between hollow microspheres 300 and neighboring porous polymer beads 200.

The porous polymer beads 200 and hollow microspheres 300 are preferably substantially uniformly distributed within the matrix 150. For example, the porous polymer beads 200 can be distributed within the matrix 150 in a manner such that at all locations within the syntactic foam 102, the average distance between each neighboring pair of porous polymer beads 200 is less than the bead width 202 of the smallest the porous polymer bead 200 in the syntactic foam 102. Alternatively or additionally, the average distance between each neighboring pair of porous polymer beads 200 is at least one microsphere diameter 302 of the largest hollow microsphere 300. Similarly, the hollow microspheres 300 can be distributed within the matrix 150 in a manner such that the average distance between each neighboring pair of hollow microspheres 300 in the syntactic foam 102 is less than twice (2x) the microsphere diameter 302 of the largest hollow microsphere 300.

Referring to Figures 3-5, the porous polymer beads 200 are formed of a low-density thermoplastic foam material. For example, the porous polymer beads 200 are expanded polystyrene beads and/or expanded polypropylene beads. Figure 4 shows an example of an expanded polystyrene bead 203. Figure 5 is a magnified view of an example of the cellular-like internal structure 204 of the expanded polystyrene bead 203 at an exaggerated scale. In each syntactic foam 102 configuration disclosed herein, the porous polymer beads 200 have a bulk density of less than 0.1 g/cm³, and more preferably less than 0.05 g/cm³. In addition, in each syntactic foam 102 configuration disclosed herein, the bead width 202 or diameter is smaller than 1.5 mm. In one example, the bead width 202 or diameter is between 0.5-1.5 mm. In the present disclosure, the bead width 202 of a porous polymer bead 200 is a measure of its maximum width, as shown in the examples of Figures 4, 8 and 9.

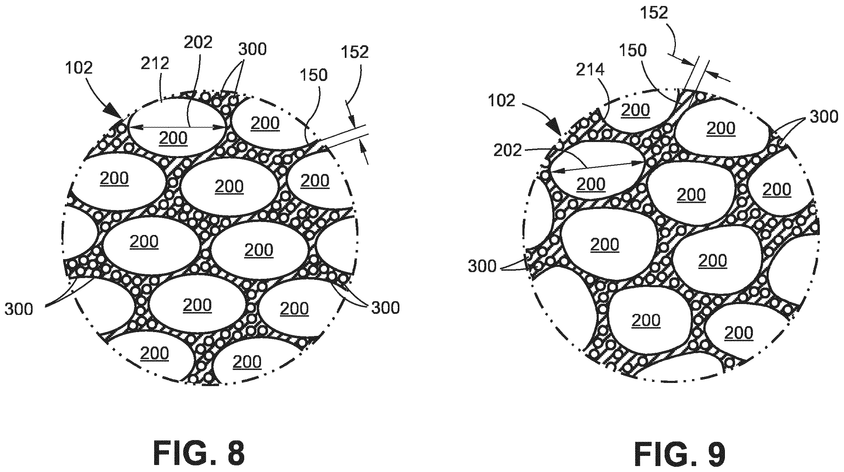

The porous polymer beads 200 have a generally rounded shape. In the example of Figures 3-4, the porous polymer beads 200 have a generally spherical shape 210. However, the porous polymer beads 200 can be provided in any one of a variety of alternative shapes, such as an elliptical shape 212 (i.e., spheroidal) shown in Figure 8 and/or an irregular rounded shape 214 shown in Figure 9. Although the syntactic foam 102 configurations in Figures 3, 8 and 9 each contain porous polymer beads 200 of a single shape, the syntactic foam 102 can be manufactured to include porous polymer beads 200 of two or more different shapes.

The hollow microspheres 300 (Figures 6-7) are comprised of glass, ceramic, polymer, or other suitable material. In addition, the hollow microspheres 300 have a density of less than 0.6 g/cm³, and preferably less than 0.4 g/ cm³. In one example, the hollow microspheres 300 are hollow glass microspheres (HGMS) such as S38 HGMS and S38hs HGMS commercially available from the 3M Company of St. Paul, Minnesota. S38 HGMS and S38hs HGMS are made of soda-lime borosilicate glass and have a bulk density of 0.38 g/cm³. K25 HGMS are also available from the 3M Company and are made of soda-lime borosilicate glass and have a bulk density of 0.25 g/cm³.

In the presently-disclosed syntactic foam 102, the largest of the hollow microspheres 300 is at least 7 times smaller than the smallest of the porous polymer beads 200. As shown in Figure 7, the size of the hollow microspheres 300 refers to the microsphere diameter 302. The relatively small size of the hollow microspheres 300 enhances their capacity to fill the interstices 312 (Figure 3) between the porous polymer beads 200, thereby reducing the effective density of the syntactic foam 102. In one example, the largest of the hollow microspheres 300 is at least 10 times smaller than the smallest of the porous polymer beads 200. In some examples, the microsphere diameter 302 of the hollow microspheres 300 in a syntactic foam 102 is no smaller than 40 µm.

Notably, the hollow microspheres 300 in the syntactic foam 102 have a size distribution of no greater than ±10 µm. In the present disclosure, size distribution refers to the percentage of hollow microspheres 300 for which the microsphere diameters 302 fall within a specified size range. For example, the syntactic foam 102 can be provided in a configuration in which at least 70 percent of the hollow microspheres 300 have a microsphere diameter 302 in a size range of ±10 µm (e.g., a microsphere diameter of 50-70 µm), and the remaining 30 or more percent of hollow microspheres 300 have a microsphere diameter 302 that is outside of the size range (e.g., smaller than 50 µm or larger than 70 µm). In another example, the syntactic foam 102 can be provided in a configuration in which at least 90 percent of the hollow microspheres 300 have a size range of ±10 µm. In still another example, at least 95 percent of the hollow microspheres 300 have a size range of ±10 µm. In a still further example, at least 99 percent of the hollow microspheres 300 have a size range of ±10 µm.

In some examples of the syntactic foam 102, the size distribution of the hollow microspheres 300 is no greater than ±5 µm. For example, the syntactic foam 102 can be provided in a configuration in which the microsphere diameters 302 of at least 70 percent of the hollow microspheres 300 have a size range of ±5 µm (e.g., a microsphere diameter of 53-63 µm). In another example, the syntactic foam 102 can be provided in a configuration in which at least 90 percent of the hollow microspheres 300 have a size range of ±5 µm. In still another example, at least 95 percent of the hollow microspheres 300 have a size range of ±5 µm. In a still further example, at least 99 percent of the hollow microspheres 300 have a size range of ±5 µm.

As mentioned above, the relatively narrow size distribution of the hollow microspheres 300 results in a syntactic foam 102 having a relatively high hydrostatic crush strength at a relatively low density. The relatively high hydrostatic crush strength of the syntactic foam 102 is associated with the isostatic crush strength of the hollow microspheres 300, which is a function of their bulk density and size (i.e., microsphere diameter 302). In general, the density and isostatic crush strength of the hollow microspheres 300 increases with decreasing size.

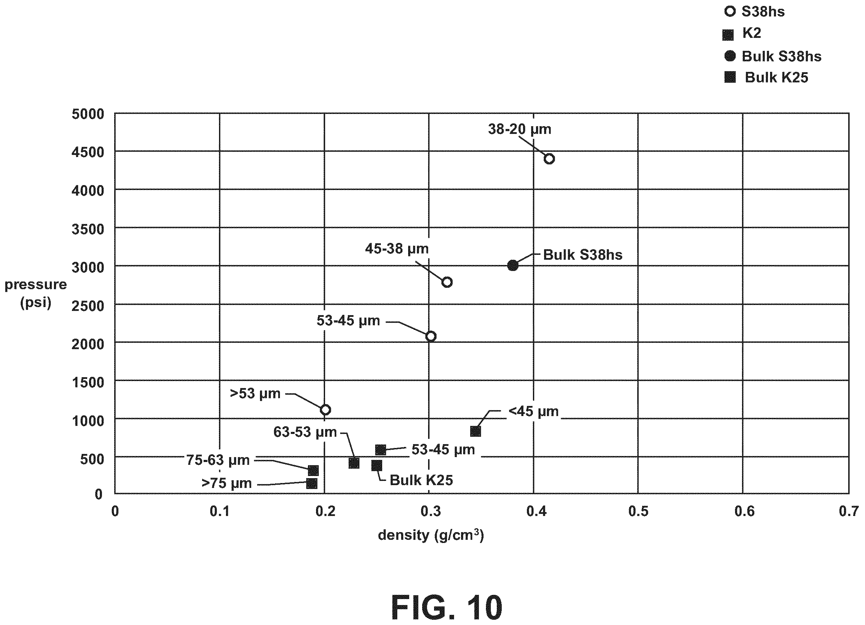

For example, Figure 10 is a chart of the properties of S38hs and K25 hollow glass microspheres in several different size distributions. The size distributions were obtained by sieving bulk quantities of S38hs and K25 hollow glass microspheres in 10 µm increments from 10-63 µm using stainless steel mesh sieves 412. Each increment was characterized by isostatic crush strength and density. As shown in Figure 10, the K25 hollow glass microspheres in the 75-63 µm size range have a density of 0.19 g/cm³ and an isostatic crush strength of approximately 300 psi. In contrast, smaller K25 hollow glass microspheres in the 53-45 µm size range have a density of 0.25 g/cm³ and an isostatic crush strength of approximately 600 psi, and sub-45 µm K25 hollow glass microspheres have a density of 0.34 g/cm³ and an isostatic crush strength of approximately 800 psi. Notably, the isostatic crush strength of sub-53 µm K25 hollow glass microspheres is higher than the isostatic crush strength (400 psi, as-tested) of bulk quantities of K25 hollow glass microspheres, which have a relatively large size range of 20-100 µm and an average diameter of 40 µm.

Also shown in Figure 10 are the properties of S38hs hollow glass microspheres in the 53-45 µm size range, which have a density of 0.30 g/cm³ and an isostatic crush strength of approximately 2,100 psi. In contrast, smaller S38hs hollow glass microspheres in the 38-20 µm size range have a density of 0.41 g/cm³ and an isostatic crush strength of approximately 4,400 psi. As shown in Figure 10, S38hs hollow glass microspheres at sizes above 38 µm have a density comparable to the K25 hollow glass microspheres, but more than double the isostatic crush strength. Notably, the isostatic crush strength of 38-20 µm S38hs hollow glass microspheres is higher than the isostatic crush strength (3,000 psi, as-tested) of bulk quantities of S38hs hollow glass microspheres which range in size from 20-100 µm.

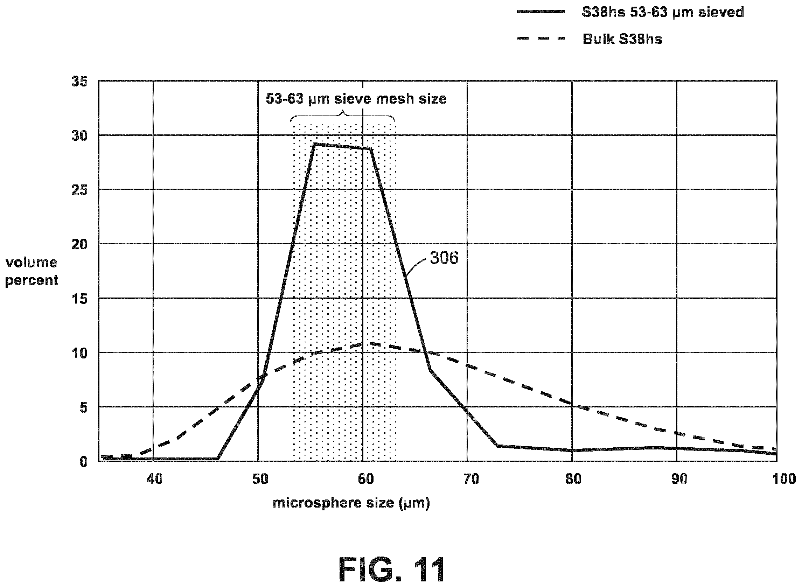

Figure 11 is graph of the size distribution of a bulk quantity 304 of S38hs hollow glass microspheres and of a sorted quantity 306 (i.e., sieved) of S38hs hollow glass microspheres. The sorted quantity 306 has a size range of 53-63 µm, which is an example of a size distribution of ±5 µm. The 53-63 µm size range was achieved using mesh sieves 412 respectively having mesh sizes of 53 µm and 63 µm. For bulk S38hs, the volume percentage of 50-73 µm (i.e., a size distribution of ±11.5 µm) hollow glass microspheres is 43 percent of the total volume. When sieved, the volume percentage of 50-73 µm hollow glass microspheres increases to 75 percent of the total volume. As shown in Figure 11, the majority of the volume of hollow glass microspheres lies within the mesh sizes of the sieves 412, which indicates that sieving selectively tightens the size distribution within the sieving range.

Advantageously, a relatively narrow size distribution (e.g., ±10 µm or ±5 µm) of the hollow microspheres 300 maximizes packing efficiency within the powder bed 310, which reduces the density of the syntactic foam 102 while maintaining high hydrostatic crush strength. In contrast, low density syntactic foam 102 containing bulk unsorted hollow microspheres in a broad size range (e.g., 20-100 µm) has a relatively low hydrostatic crush strength.

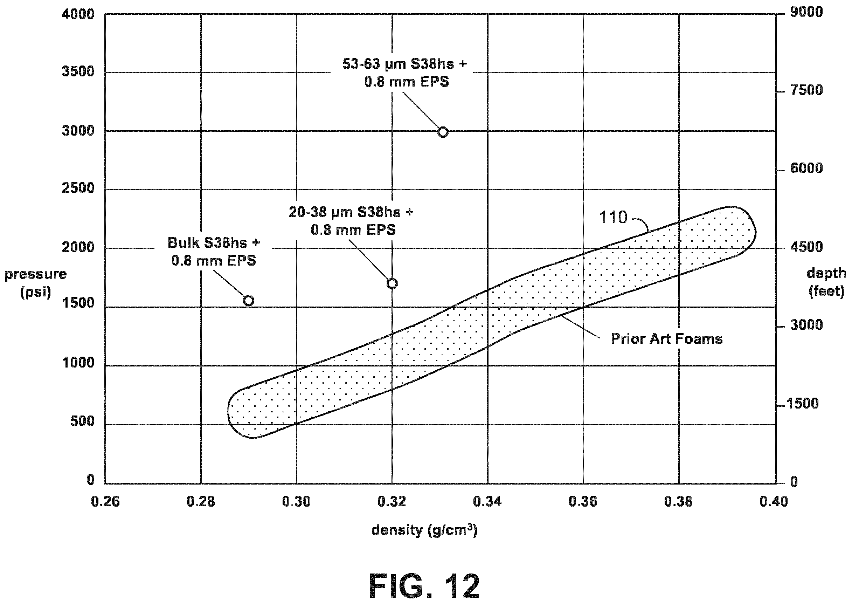

For example, Figure 12 illustrates the increased hydrostatic crush strength (i.e., interchangeably referred to herein as hydrostatic pressure) and corresponding underwater service depth for test specimens (not shown) formed of several different syntactic foam 102 configurations respectively containing different size distributions of hollow microspheres 300. Also shown is the hydrostatic crush strength of syntactic foam 102 containing bulk hollow microspheres, and the hydrostatic crush strength of prior art low-density foams 110.

The hydrostatic crush strength data in Figure 12 was generated by testing test specimens (not shown) having different syntactic foam 102 configurations. For example, test specimens were manufactured from syntactic foam 102 having 0.8 mm expanded polystyrene (EPS) beads combined separately with each of the following hollow glass microspheres: 53-63 µm S38hs, 38-20 µm S38hs, and bulk S38hs. Each of the test specimens was cored from a larger piece of syntactic foam 102, and the exterior surfaces of the test specimens were sealed using epoxy resin. Each test specimen was then subjected to hydrostatic compression while water volume displacement was recorded.

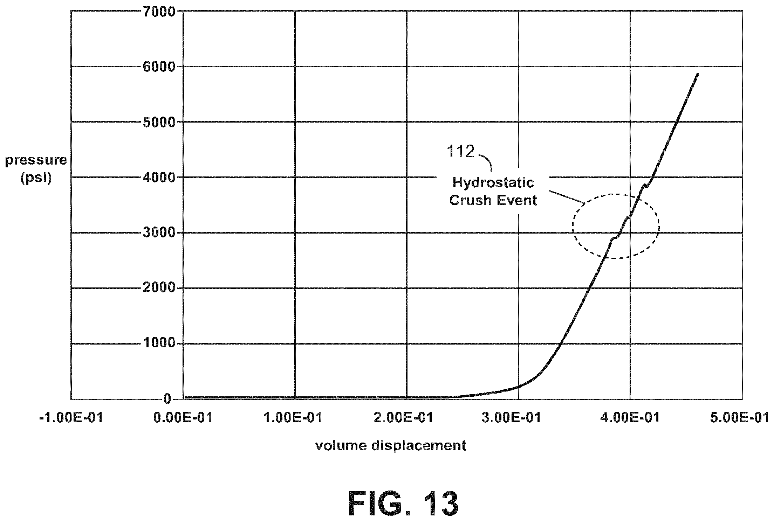

Figure 13 is a plot of water volume displacement as a function of hydrostatic pressure (i.e., hydrostatic compression) applied to the test specimens. The hydrostatic crush strength of each test specimen is characterized based on the relationship of water volume displacement to pressure. For example, a change in water volume displacement without a corresponding change in hydrostatic pressure indicated the occurrence of a crush event 112 in the test specimen. In Figure 13, the initial crush event 112 is represented by the initial break in the linearity of the plot, which occurs at approximately 2,900 psi. The hydrostatic pressure then increases by a small amount, after which another break occurs, indicating further crushing of the test specimen.

Referring back to Figure 12, testing revealed that the test specimen containing 0.8 mm EPS beads and 53-63 µm S38hs hollow glass microspheres had a density of 0.33 g/cm³ and a hydrostatic crush strength (i.e., pressure capability) of approximately 3,000 psi. The test specimen containing 0.8 mm EPS beads and 20-38 µm S38hs had a density of 0.32 g/cm³ and a hydrostatic crush strength of approximately 1,800 psi. In contrast, the syntactic foam 102 test specimen containing 0.8 mm EPS beads and bulk S38 had a density of 0.29 g/cm³ and a hydrostatic crush strength of approximately 1,600 psi. The prior art low-density foams 110 shown in Figure 12 had an even lower hydrostatic crush strength than each version of the syntactic foam 102 containing S38hs hollow glass microspheres. As can be seen, the presently-disclosed syntactic foam 102 with controlled-size-distribution hollow microspheres 300 provides a significant increase in performance relative to conventional prior art low-density foams 110.

The improved performance of the presently-disclosed syntactic foam 102 is due to the narrow size distribution of the hollow microspheres 300, which control the spacing between the porous polymer beads 200. Toward this end, the spherical shape 210 of the hollow microspheres 300 provides uniformity of size of the hollow microspheres 300 which, in combination with the narrow size distribution, results in uniformity of the wall thickness 152 (Figures 3, 8, 9) of the matrix 150. Uniformity of the wall thickness 152 results in a syntactic foam 102 having a relatively high hydrostatic crush strength and a relatively low density, as compared to a syntactic foam 102 in which the hollow microspheres 300 have a relatively broad size distribution as is typical of bulk or unsorted hollow microspheres.

The presently-disclosed syntactic foam 102 can be manufactured to have different densities and associated hydrostatic crush strengths. For example, syntactic foam 102 having a density of 0.20-0.25 g/cm³ has a hydrostatic crush strength of greater than 500 psi. In another example, syntactic foam 102 having a density of 0.28-0.32 g/ cm³ has a hydrostatic crush strength of greater than 1500 psi. In still other examples, syntactic foam 102 having a density of 0.32-0.35 g/cm³ has a hydrostatic crush strength of greater than 2000 psi. The above-noted combinations of density and hydrostatic crush strength are applicable for the syntactic foam 102 in the post-cured state after heat curing at an elevated temperature (e.g., 100-150°C) for a predetermined period of time (e.g., 2 hours). Advantageously, heat curing the syntactic foam 102 increases the hydrostatic crush strength by 25-50 percent relative to its hydrostatic crush strength in the green state.

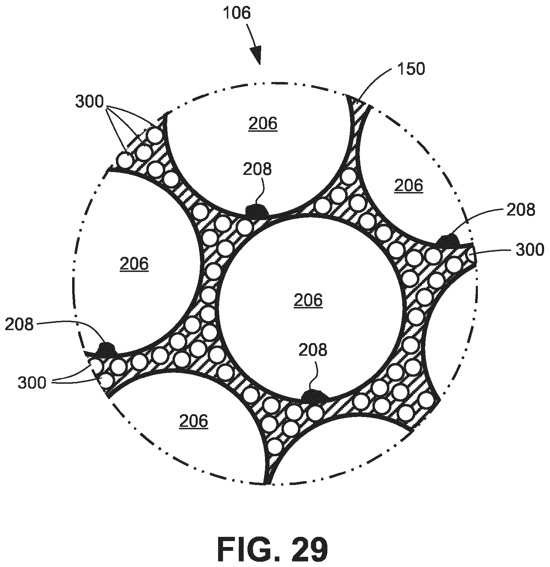

When the syntactic foam 102 is in the green state, the porous polymer beads 200 have the internal structure 204 similar to the example shown in Figure 26. When the green state syntactic foam 104 is heated during final cure, each porous polymer bead 200 shrinks, resulting in a matrix cavity 206. In this regard, each matrix cavity 206 is defined by the cured matrix 150, and not the original porous polymer bead 200. Each matrix cavity 206 encloses a volume occupied partially by a polymer particle 208 as shown in the example of Figure 29. As described below, the polymer particle 208 is the result of shrinkage of the porous polymer bead 200 when the green state syntactic foam 104 is heated during final cure.

Although Figures 3 and 8 show syntactic foam 102 having a single size of the porous polymer beads 200, the syntactic foam 102 can be provided in a configuration in which the porous polymer have more than one size. For example, the syntactic foam 102 can be provided in a trimodal configuration (not shown) having exactly two sizes of porous polymer beads 200, in addition to the hollow microspheres 300. As mentioned above, the bead width 202 of each size of the porous polymer beads 200 in a trimodal syntactic foam is smaller than 1.5 mm. For example, the bead width 202 of each of the two sizes of porous polymer beads 200 in the trimodal syntactic foam is between 0.5-1.5 mm. In addition, the largest of the hollow microspheres 300 is at least 7 times smaller than the smallest of the porous polymer beads 200. Furthermore, the hollow microspheres 300 have a size distribution of no greater than ±10 µm.

In another example of syntactic foam 102 in a trimodal configuration, the porous polymer beads 200 can be provided in exactly one size, and the hollow microspheres 300 can be provided in exactly two sizes. As discussed above, for any syntactic foam 102 configuration disclosed herein including trimodal configurations, the bead width 202 of the porous polymer beads 200 is smaller than 1.5 mm (e.g., between 0.5-1.5 mm), and the largest of the hollow microspheres 300 is at least 7 times smaller than the smallest of the porous polymer beads 200. Furthermore, both of the two different sizes of hollow microspheres 300 are within the same size distribution, and which is no greater than ±10 µm.

In further examples, the syntactic foam 102 can optionally include one or more additives to improve manufacturability and/or performance of the syntactic foam 102. For example, expanded aluminum such as carbon nanotubes (not shown) can be added to carry heat away from the interior of the syntactic foam 102 during final cure. Alternatively or additionally, a wetting agent (not shown) can be added to improve wetting of the surfaces of the porous polymer beads 200 and the hollow microspheres 300 to facilitate resin impregnation.

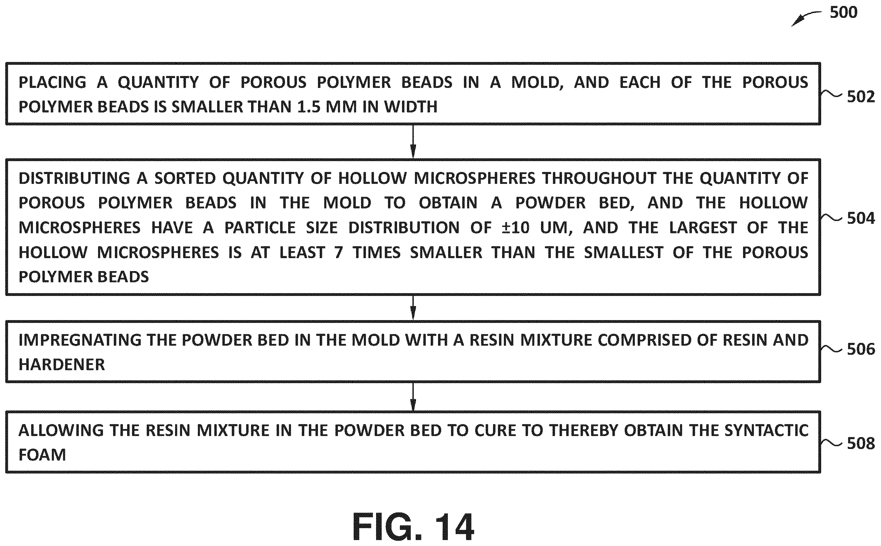

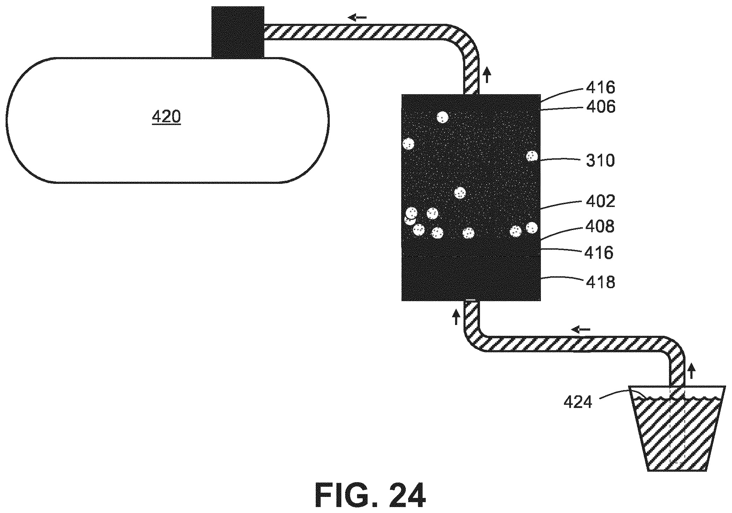

Referring to Figure 14 with additional reference to Figures 15-29, shown in Figure 14 is a flowchart of operations included in a method 500 of manufacturing the presently-disclosed syntactic foam 102. Step 502 of the method 500 includes placing a quantity of one or more sizes of porous polymer beads 200 in a mold 402 as shown in Figure 15. In the example shown, the mold 402 has a cylindrical shape. However, the mold 402 can be of any shape, size, and/or configuration. The mold 402 has a mold top side 406 and a mold bottom side 408

In step 502, each of the porous polymer beads 200 is smaller than 1.5 mm in width. In some examples, the porous polymer beads 200 are larger than 0.5 mm in width (i.e., 0.5-1.5 mm). As described above, the porous polymer beads 200 are formed of a thermoplastic foam material such as expanded polystyrene beads and/or expanded polypropylene beads. The porous polymer beads 200 have a bulk density of less than 0.1 g/cm³, and preferably less than 0.05 g/cm³.

The method 500 can optionally include agitating the porous polymer beads 200 during and/or after placing the porous polymer beads 200 in the mold 402 to thereby to control packing of the porous polymer beads 200 in the mold 402. Agitation of the porous polymer beads 200 can be performed by directly agitating the porous polymer beads 200, tapping on the mold 402, and/or mechanically vibrating the mold 402 using a mechanical vibrator 410 as shown in Figure 16. The mold 402 can be vibrated at a relatively high frequency (e.g., 1500-2000 rpm) for a short period of time.

Step 504 of the method 500 includes distributing a sorted quantity 306 of hollow microspheres 300 throughout the quantity of porous polymer beads 200 (Figure 18) in the mold 402 to obtain a powder bed 310 (Figure 19). As described above, the sorted quantity 306 of hollow microspheres 300 has a particle size distribution of no greater than ±10 microns. In some examples, the hollow microspheres 300 have a particle size distribution of no greater than ±5 microns. The largest of the hollow microspheres 300 is at least 7 times smaller than the smallest of the porous polymer beads 200. The hollow microspheres 300 are formed of glass, ceramic, polymer, and/or other material and have a density of less than 0.6 gram/cm³, and preferably less than 0.4 g/ cm³.

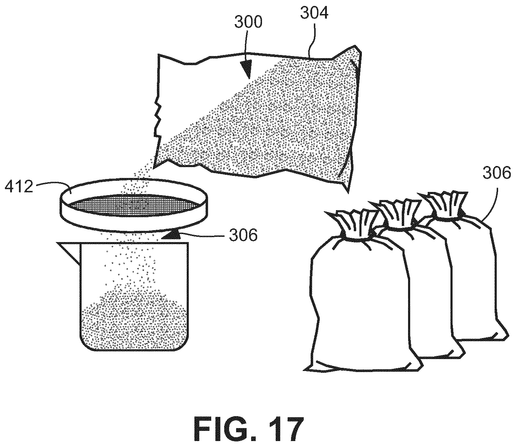

Prior to or during step 504, the method 500 in some examples includes sieving a bulk quantity 304 (Figure 17) of hollow microspheres 300 to obtain the sorted quantity 306 of hollow microspheres 300 having the desired size distribution of (e.g., ±10 µm, ±5 µm, etc.). For example, Figure 17 illustrates the process of sieving a bulk quantity 304 of hollow microspheres 300 using a mesh sieve 412. Depending on the initial size range (i.e., 20-100 µm) of the bulk quantity 304 of hollow microspheres 300, multiple mesh sieves 412 (e.g., at least two mesh sieves 412) having different mesh sizes may be required during the sieving operation.

As mentioned above, the hollow microspheres 300 keep the porous polymer beads 200 apart from each other. Although the hollow microspheres 300 are sieved to a relatively large size (e.g., 53-63 µm), sieving eliminates at least a portion of the hollow microspheres 300 that have a low isostatic crush strength as shown in Figure 10, as the largest sizes of hollow microspheres 300 that would result in a low hydrostatic crush strength of the syntactic foam 102. For example, sieving can be performed in a manner that results in a portion of the hollow microspheres 300 having a microsphere diameter 302 in the greater-than-average-half (e.g., 58-63 µm) of the size distribution (e.g., 53-63 µm). Sieving also eliminates a portion of the relatively small sizes of hollow microspheres 300 that are very dense and would cause the wall thickness 152 (Figures 3, 8, 9) of the cured matrix 150 to be relatively thin, also resulting in a low crush strength for the syntactic foam 102.

To improve the packing efficiency within the mold 402, step 504 can optionally include pouring the hollow microspheres 300 into the mold 402 while oscillating the mold 402. For example, Figure 18 shows a mechanical vibrator 410 vibrating the mold 402 as a means to fill the interstices 312 (Figure 3) between the porous polymer beads 200 with the hollow microspheres 300 as they are poured into the mold 402. Oscillation of the mold 402 can also occur while sieving the hollow microspheres 300 over one or more mesh sieves 412 and into the mold 402. The mold 402 can be oscillated or vibrated before, during, and/or after pouring the hollow microspheres 300 into the mold 402. In some examples, the oscillation of the mold 402 can continue until the free volume of interstices 312 between the porous polymer beads 200 are filled with hollow microspheres 300.

In some examples, the sorted quantity 306 of hollow microspheres 300 are added to porous polymer beads 200 to achieve a 55-75 volume percentage of porous polymer beads 200 relative to a combined volume of the hollow microspheres 300, the porous polymer beads 200, and the space filled by the matrix. Figure 19 shows the mold 402 containing the powder bed 310 comprised of porous polymer beads 200 and hollow microspheres 300. Figure 20 shows the hollow microspheres 300 distributed throughout the porous polymer beads 200.

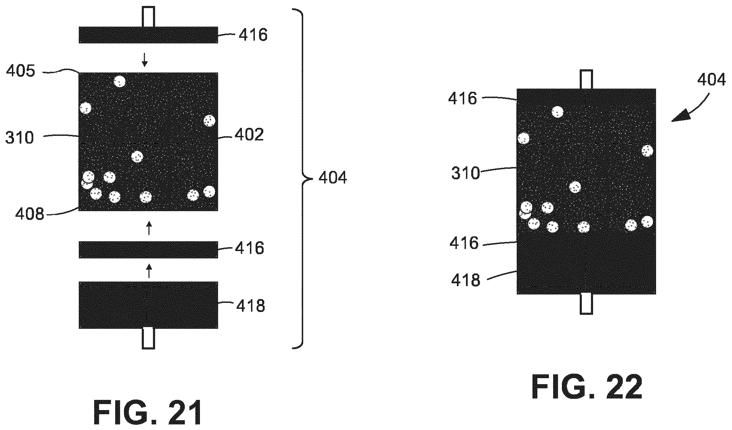

Referring to Figures 21-22, shown is an example of a mold assembly 404 having a porous frit 416 or other porous material placed on the mold top side 406 and a porous frit 416 on the mold bottom side 408. The porous frits 416 allow liquid impregnation of the powder bed 310. A manifold 418 can be mounted on the side of the mold 402 where the resin mixture 424 (Figure 23) is introduced to ensure that the resin mixture 424 is introduced across the entire cross section of the powder bed 310.

Prior to impregnating the powder bed 310, the method 500 includes mixing resin with an appropriate amount of hardener to obtain a homogenous resin mixture 424 (Figure 23) that, over time, hardens or cures into cured resin (i.e., the matrix 150). As described above, the resin mixture 424 is a thermosetting material such as epoxy, silicone, polyurethane, polyuria, polyester, cyclic olefin, phenolic resin, polyimide, polybenzimidazole, or other thermosetting compositions.

Figure 23 shows an example of a manufacturing system 400 for impregnating the powder bed 310 contained in the mold 402. The manufacturing system 400 includes a resin container 422 containing the resin mixture 424. The resin container 422 is fluidically coupled to the mold bottom side 408 of the mold 402. In addition, the manufacturing system 400 includes a vacuum source 420 such as a vacuum pump which is fluidically coupled to the mold top side 406 of the mold 402. The powder bed 310 is sealed on both ends of the mold 402 by the porous frits 416, which allows for liquid impregnation of the powder bed 310 with a pore size that is smaller than that of the smallest hollow microspheres 300 (e.g., less than 10 µm), but the pore size is large enough to allow the resin mixture 424 to pass through.

Step 506 of the method 500 includes impregnating the powder bed 310 with the resin mixture 424. In the example of Figures 23-24, impregnating the powder bed 310 with the resin mixture 424 comprises introducing the resin mixture 424 into the powder bed 310 via the application of vacuum pressure to a side of the mold 402 opposite the side into which the resin mixture 424 is introduced. Impregnation is initiated by activating the vacuum pump to generate vacuum pressure for drawing the resin mixture 424 from the resin container 422 in an upward direction into the manifold 418 on the mold bottom side 408, through the porous frit 416, through the powder bed 310, and out of the porous frit 416 on the mold top side 406. Pressure can also be applied to the resin source (e.g., resin container 422) to speed impregnation. Drawing the resin mixture 424 in an upward direction improves debulking of the impregnated powder bed 310, as compared to reduced debulking capability if the resin mixture 424 is drawn in a downward direction through the powder bed 310. In step 506, vacuum pressure is applied for a predetermined amount of time (e.g., 1-3 hours) and/or until a modest amount of resin mixture 424 has exited the mold top side 406 and/or until the entire powder bed 310 is saturated with resin mixture 424 and is preferably free of air bubbles.

Referring to Figures 25-26, step 508 of the method 500 includes allowing the resin mixture 424 in the powder bed 310 to initially cure to thereby obtain the syntactic foam 102 in the green state. In some examples, the resin mixture 424 can cure or harden at room temperature within a predetermined period of time (e.g., 12 hours). Figure 26 shows the cellular-like internal structure 204 of the porous polymer beads 200 when the syntactic foam 102 is in the green state.

After room temperature curing is complete, the green state syntactic foam 104 is heated to an elevated temperature (e.g., 135°C) and held for a predetermined period of time (e.g., 2 hours) to fully crosslink the matrix 150 (i.e., the resin mixture 424), resulting in post-cured syntactic foam 106. For example, the green state syntactic foam 104 can be placed in an oven 426 for heat treatment during cure as shown in Figure 27. After cool-down from final cure, the post-cured syntactic foam 106 is removed from the mold 402 as shown in Figure 28.

Figure 29 is a cross section of the post-cured syntactic foam 106 containing matrix cavities 206, formerly porous polymer beads 200 having an internal structure 204 (e.g., Figure 26) when the syntactic foam 102 is in the green state. In the post-cured state of Figure 29, each matrix cavity 206 encloses a volume occupied partially by a polymer particle 208. The polymer particle 208 in each matrix cavity 206 is the result of shrinkage of the internal structure 204 of the porous polymer bead 200 during heating of the green state syntactic foam 104 during final cure.

In the post-cured state, the syntactic foam 102 can be shaped as necessary into a foam product 108. For example, the syntactic foam 102 can be machined into a foam product 108 that is shaped complementary to the shape of the interior pockets and/or exterior contours of a subsea application such as an unmanned undersea vehicle 100 (e.g., Figure 1).

Many modifications and other versions and examples of the disclosure will come to mind to one skilled in the art to which this disclosure pertains having the benefit of the teachings presented in the foregoing descriptions and the associated drawings. The versions and examples described herein are meant to be illustrative and are not intended to be limiting or exhaustive. Although specific terms are employed herein, they are used in a generic and descriptive sense only and not for purposes of limitation. Functionally equivalent methods and apparatuses within the scope of the disclosure, in addition to those enumerated herein, are possible from the foregoing descriptions. Such modifications and variations are intended to fall within the scope of the appended claims. The present disclosure is to be limited only by the terms of the appended claims, along with the full scope of equivalents to which such claims are entitled.

Clause 1. A syntactic foam, comprising:
a matrix;
a quantity of porous polymer beads in the matrix, each of which is smaller than 1.5 mm in width; and
a quantity of hollow microspheres distributed within the matrix amongst the quantity of porous polymer beads, and the largest of the hollow microspheres is at least 7 times smaller than the smallest of the porous polymer beads, and the hollow microspheres have a size distribution of ±10 µm.

Clause 2. A syntactic foam, comprising:
a matrix;
a quantity of matrix cavities in the matrix, each enclosing a volume partially occupied by a polymer particle, and each matrix cavity has a maximum width of less than 1.5 mm; and
a quantity of hollow microspheres distributed within the matrix amongst the quantity of matrix cavities, and the largest of the hollow microspheres is at least 7 times smaller than the smallest of the matrix cavities, and the hollow microspheres have a size distribution of no larger than ±10 µm.

Clause 3. The syntactic foam of Clause 2, wherein the matrix is comprised of at least one of the following thermosetting materials: epoxy, silicone, polyurethane, polyuria, polyester, cyclic olefin, phenolic resin, polyimide, polybenzimidazole.

Clause 4. A method of manufacturing a syntactic foam according to Clause 1, comprising:
placing a quantity of porous polymer beads in a mold, and each of the porous polymer beads is smaller than 1.5 mm in width;
distributing a sorted quantity of hollow microspheres throughout the quantity of porous polymer beads in the mold to obtain a powder bed, and the hollow microspheres have a particle size distribution of no greater than ±10 µm, and the largest of the hollow microspheres is at least 7 times smaller than the smallest of the porous polymer beads;
impregnating the powder bed in the mold with a resin mixture comprised of resin and hardener; and
allowing the resin mixture in the powder bed to cure to thereby obtain the syntactic foam.

Clause 5. The method of Clause 4, wherein the porous polymer beads (200) comprise at least one of the following thermoplastic materials: expanded polystyrene beads, expanded polypropylene beads.

Clause 6. The method of any of Clauses 4 or 5, wherein the porous polymer beads (200) have a density of less than 0.1 g/cm³.

Clause 7. The method of any of Clauses 4 to 6, wherein the hollow microspheres (300) are comprised of at least one of the following materials: glass, ceramic, polymer.

Clause 8. The method of any of Clauses 4 to 7, wherein the hollow microspheres (300) have a density of less than 0.6 g/cm³.

## Claims

1. A syntactic foam (102), comprising:
a matrix (150);
a quantity of porous polymer beads (200) in the matrix (150), each of which is smaller than 1.5 mm in width; and
a quantity of hollow microspheres (300) distributed within the matrix (150) amongst the quantity of porous polymer beads (200), and the largest of the hollow microspheres (300) is at least 7 times smaller than the smallest of the porous polymer beads (200) , and the hollow microspheres (300) have a size distribution of ±10 µm.

2. The syntactic foam (102) of Claim 1, wherein the matrix (150) is comprised of at least one of the following thermosetting materials: epoxy, silicone, polyurethane, polyuria, polyester, cyclic olefin, phenolic resin, polyimide, polybenzimidazole.

3. The syntactic foam (102) of any of Claims 1 or 2, wherein the porous polymer beads (200) comprise at least one of the following thermoplastic materials: expanded polystyrene beads, expanded polypropylene beads.

4. The syntactic foam (102) of any of Claims 1 to 3, wherein the porous polymer beads (200) have a density of less than 0.1 g/cm³.

5. The syntactic foam (102) of any of Claims 1 to 4, wherein the hollow microspheres (300) are comprised of at least one of the following materials: glass, ceramic, polymer.

6. The syntactic foam (102) of any of Claims 1 to 5, wherein the hollow microspheres (300) have a density of less than 0.6 g/cm³.

7. The syntactic foam (102) of any of Claims 1 to 6, having one of the following three combinations of density and hydrostatic crush strength:
a density of 0.20-0.25 g/cm³ and a hydrostatic crush strength of greater than 500 psi;
a density of 0.28-0.32 g/ cm³ and a hydrostatic crush strength of greater than 1500 psi; or
a density of 0.32-0.35 g/ cm³ and a hydrostatic crush strength of greater than 2000 psi.

8. A syntactic foam (106), comprising:
a matrix (150);
a quantity of matrix cavities (206) in the matrix (150), each enclosing a volume partially occupied by a polymer particle (208), and each matrix cavity (206) has a maximum width of less than 1.5 mm; and
a quantity of hollow microspheres (300) distributed within the matrix (150) amongst the quantity of matrix cavities (206), and the largest of the hollow microspheres (300) is at least 7 times smaller than the smallest of the matrix cavities (206), and the hollow microspheres (300) have a size distribution of no larger than ±10 µm.

9. The syntactic foam (106) of Claim 8, having one of the following three combinations of density and hydrostatic crush strength:
a density of 0.20-0.25 g/cm³ and a hydrostatic crush strength of greater than 500 psi;
a density of 0.28-0.32 g/ cm³ and a hydrostatic crush strength of greater than 1500 psi; or
a density of 0.32-0.35 g/ cm³ and a hydrostatic crush strength of greater than 2000 psi.

10. A method of manufacturing a syntactic foam (102) according to any of claims 1 to 7, comprising:
placing a quantity of porous polymer beads (200) in a mold (402), and each of the porous polymer beads (200) is smaller than 1.5 mm in width;
distributing a sorted quantity (306) of hollow microspheres (300) throughout the quantity of porous polymer beads (200) in the mold (402) to obtain a powder bed (310), and the hollow microspheres (300) have a particle size distribution of no greater than ±10 µm, and the largest of the hollow microspheres (300) is at least 7 times smaller than the smallest of the porous polymer beads (200);
impregnating the powder bed (310) in the mold (402) with a resin mixture (424) comprised of resin and hardener; and
allowing the resin mixture (424) in the powder bed to cure to thereby obtain the syntactic foam (102).

11. The method of Claim 10, further comprising the step of oscillating the mold (402) during and/or after placing the quantity of porous polymer beads (200) in the mold (402) to thereby to control packing of the porous polymer beads (200) in the mold (402).

12. The method of any of Claims 10 or 11, further comprising the step of sieving a bulk quantity (304) of the hollow microspheres (300) to obtain the sorted quantity (306) of hollow microspheres (300) having a particle size distribution of no greater than ±5 µm.

13. The method of any of Claims 10 to 12, wherein the step of distributing the sorted quantity (306) of hollow microspheres (300) throughout the quantity of porous polymer beads (200) comprises:
pouring the hollow microspheres (300) into the mold (402) while oscillating the mold (402) until a free volume of interstices (312) between the porous polymer beads (200) is filled with the hollow microspheres (300).

14. The method of any of claims Claim 10 to 13, wherein the step of distributing the sorted quantity (306) of hollow microspheres (300) throughout the quantity of porous polymer beads (200) is performed in a manner to achieve 55-75 volume percentage of porous polymer beads (200) relative to a combined volume of the hollow microspheres (300), the porous polymer beads (200), and space to be filled by the resin mixture (424).

15. The method of any of Claims 10 to 14, wherein the step of impregnating the powder bed (310) with the resin mixture (424) comprises:
applying vacuum pressure to a side of the mold (402) opposite the side on which the resin mixture (424) is introduced.
